Europäisches Patentamt

European Patent Office

Office européen des brevets

(11) Veröffentlichungsnummer: **0 415 281 A2**

# EUROPÄISCHE PATENTANMELDUNG

(21) Anmeldenummer: 90116240.4

(51) Int. Cl.5: **G06F 15/74**

(22) Anmeldetag: 23.08.90

(30) Priorität: 29.08.89 DE 3928456

(43) Veröffentlichungstag der Anmeldung:
06.03.91 Patentblatt 91/10

(84) Benannte Vertragsstaaten:
DE ES FR GB IT NL

(71) Anmelder: **NORD-MICRO, ELEKTRONIK FEINMECHANIK AG**
**Victor-Slotosch-Strasse 20**
**W-6000 Frankfurt 60(DE)**

(72) Erfinder: **Höhner, Herbert**
**Wiesenau 13**
**W-6392 Neu Anspach(DE)**
Erfinder: **Kesberg, Jürgen**
**Augustus Strasse 26**
**W-6369 Nidderau 1(DE)**

(74) Vertreter: **Seibert, Rudolf, Dipl.-Ing. et al**
**Rechtsanwälte Seibert & Partner**
**Tattenbachstrasse 9**
**W-8000 München 22(DE)**

(54) Verfahren und Schaltungsanordnung zum Bilden eines Auswertungssignals aus einer Mehrzahl redundanter Messsignale.

(57) Die Erfindung bezieht sich auf ein Verfahren und eine Schaltungsanordnung zum Bilden eines eine Meßgröße repräsentierenden Auswertungssignals (YM) nach einem Auswertungsalgorithmus aus einer Mehrzahl von Meßsignalen (X1, X2, X3, X4), die mittels einer Mehrzahl von die Meßgröße erfassenden Sensoren gewonnen werden.

Eine redundante Meßgrößenerfassung dient der Zuverlässigkeit und Fehlertoleranz. Die Meßsignale müssen nach einem Auswertungsalgorithmus ausgewertet werden) um ein Auswertungssignal (YM) zu bilden, das dann weiterverarbeitet werden kann. Bei extremen Anforderungen kann es nun aber sein, daß eine einfache Auswertung nicht zuverlässig genug ist.

Die Erfindung soll daher eine zuverlässigere Auswertung redundant vorliegender Meßsignale gewährleisten.

Diese Aufgabe wird dadurch gelöst, daß jedes Meßsignal einer Mehrzahl von Auswertungseinheiten zugeführt wird und jede dieser Auswertungseinheiten ein Auswertungssignal YM1, YM2, YM3, YM4 nach dem Auswertungsalgorithmus bildet.

Die Auswertung der Meßsignale erfolgt somit vorteilhaft in redundanter Weise in mehreren Kanälen und daher zuverlässiger. Sie kann besonders vorteilhaft durch spezialisierte Schaltungsanordnungen auch beschleunigt werden.

Anwendungsbereiche sind zum Beispiel die Fahrzeugtechnik und hier insbesondere die Luftfahrttechnik.

FIG.1

# VERFAHREN UND SCHALTUNGSANORDNUNG ZUM BILDEN EINES AUSWERTUNGSSIGNALS AUS EINER MEHRZAHL REDUNDANTER MESSSIGNALE

Die Erfindung bezieht sich auf ein Verfahren und eine Schaltungsanordnung zum Bilden eines eine Meßgröße repräsentierenden Auswertungssignals nach einem Auswertungsalgorithmus aus einer Mehrzahl von Meßsignalen, die mittels einer Mehrzahl von die Meßgröße erfassenden Sensoren innerhalb eines Zeitintervalls, insbesondere gleichzeitig, gewonnen werden.

Eine redundante Meßgrößenerfassung ist in Bereichen von Bedeutung, in denen es aus Sicherheits- oder Wirtschaftlichkeitsgründen in besonders hohem Maß auf Genauigkeit und Zuverlässigkeit ankommt. Ein solcher Bereich ist zum Beispiel die Fahrzeugtechnik und hier insbesondere die Luftfahrttechnik.

Redundanz heißt hier zunächst einmal Mehrfacherfassung einer Meßgröße (z.B. eines Flugparameter-Istwerts oder eines Steuerbefehlssignals) mittels einer Mehrzahl von Sensoren sowie Erzeugung einer Mehrzahl von die Meßgröße repräsentierenden Meßsignalen. (Die Zahl an Meßsignalen entspricht dabei normalerweise der Zahl an Sensoren; jedoch kann auch mehr als ein Meßsignal von einem Sensor abgeleitet sein oder/und ein Signal von einem Sensor aus Sicherheitsgründen auf mehreren Meßleitungen übertragen werden etc.) Die Mehrfacherfassung der Meßgröße erfolgt innerhalb eines so kurzen Zeitintervalls, daß die Meßgröße sich darin nicht mehr als unerheblich, z.B. nur innerhalb der Auflösungsgenauigkeit der Sensoren, ändern kann. Diese Definition schließt insbesondere eine gleichzeitige Abtastung ebenso wie eine aufeinanderfolgende Abtastung ein.

Die Redundanz steigert die Wahrscheinlichkeit, daß ein der Meßgröße getreuer Meßwert verfügbar ist. Andererseits erwächst ein Entscheidungsproblem aus der in der Praxis nicht zu vermeidenden Erscheinung, daß die Meßsignale, die ein und dieselbe Meßgröße repräsentieren sollen, auch im ungestörten Fall zumeist etwas voneinander abweichen. Deshalb müssen die Meßsignale nach einem Auswertungsalgorithmus ausgewertet werden, um ein Auswertungssignal zu bilden, das dann weiterverarbeitet werden kann.

Unter erschwerten Einsatzbedingungen und extremen Sicherheitsanforderungen kann es nun aber sein, daß eine solche einfache Auswertung nicht zuverlässig genug ist.

Der Erfindung liegt daher die Aufgabe zu Grunde, ein gattungsgemäßes Verfahren und eine gattungsgemäße Schaltungsanordnung bereitzustellen, die eine zuverlässigere Auswertung redundant vorliegender Meßsignale gewährleisten.

Diese Aufgabe wird erfindungsgemäß durch Hinzunahme der Merkmale gelöst, daß jedes Meßsignal einer Mehrzahl von Auswertungseinheiten zugeführt wird und jede dieser Auswertungseinheiten ein Auswertungssignal nach dem Auswertungsalgorithmus bildet.

Durch eine solche Auswertung der Meßsignale wird vor allem der Vorteil erzielt, daß auch die Auswertung der Meßsignale in redundanter Weise in mehreren Kanälen erfolgt und daher zuverlässiger und genauer ist.

Werden die Meßsignale vor ihrer Auswertung gefiltert, z.B. wie weiter unten näher beschrieben, wird die Auswertung unempfindlicher gegen abrupte Änderungen eines Meßsignals, wie sie in Fehlerfällen (z.B. bei Leitungsbruch, Masse schluß, Sensorausfall etc.) auftreten können. Neben diesem Schutz vor Transienten im Auswertungssignal dient eine Filterung auch der Abblockung von Rauschanteilen in den Meßsignalen.

Meßsignale können vom Auswertungsalgorithmus ausgeschlossen und vorzugsweise als fehlerbehaftet markiert werden, wenn ihr Betrag über eine vorgegebene Zeitspanne hinweg einen Höchstwert überschreitet oder einen Mindestwert unterschreitet und/oder um mehr als einen höchstzulässigen Unterschiedswert von einem Auswertungssignal abweicht. Umgekehrt kann ein Meßsignal wieder berücksichtigt werden, wenn es nicht mehr aus dem genannten Rahmen fällt.

Ein sich nach diesen Kriterien verhaltendes System konfiguriert sich somit selbst auf die Zahl der berücksichtigungsfähigen, aktiven Kanäle und verhindert eine Verfälschung des Meß- und Auswertungsergebnisses durch abnorme Meßsignale.

Bereits die jeweils am Ausgang der Auswertungseinheiten vorliegenden Auswertungssignale können einer weiteren Verarbeitung, z.B. redundanten Verarbeitungseinheiten zur Lösung einer Bewegungsgleichung, zugeführt werden.

Aus Zuverlässigkeits- und Sicherheitsgründen vorzuziehen ist es jedoch, die redundanten (mehrfach vorliegenden und normalerweise gleichen) Auswertungssignale ihrerseits zu vergleichen) einen als besonders zuverlässig anzusehenden Wert aus ihnen auszuwählen und sicherzustellen, daß nachfolgend angeordnete Verarbeitungseinheiten mit ein und demselben Eingangswert arbeiten (rechnen). Zu diesem Zweck kann vorgesehen werden, daß jedes Auswertungssignal einer Mehrzahl von Bestätigungseinheiten zugeführt wird und jede dieser Bestätigungseinheiten ein bestätigtes Auswertungssignal nach ein und demselben Bestätigungsalgorithmus bildet.

Um nicht eine Entstehung von Fehlbestätigungen zu begünstigen, wird vorzugsweise vorgesehen, daß Auswertungssignale vom Bestätigungsalgorithmus ausgeschlossen und vorzugsweise als fehlerbehaftet markiert werden, wenn ihr Betrag über eine vorgegebene Zeitspanne hinweg um mehr als einen höchstzulässigen Unterschiedswert von einem bestätigten Auswertungssignal abweicht.

Ein sich nach diesen Kriterien verhaltendes System konfiguriert sich somit selbst auf die Zahl der berücksichtigungsfähigen, aktiven Kanäle und verhindert eine Verfälschung des Bestätigungsergebnisses durch abnorme Auswertungssignale.

Vorteilhaft werden erst die bestätigten Auswertungssignale je einer Verarbeitungseinheit zum Erzeugen je eines Ausgangssignals, insbesondere eines Stellsignals, zugeführt.

Bereits diese Ausgangssignale können je einem Stellglied (Aktor) zum Stellen einer Stellgröße zugeführt werden. Aus Zuverlässigkeits- und Sicherheitsgründen vorzuziehen ist es jedoch, die redundanten (mehrfach vorhandenen und normalerweise gleichen) Ausgangssignale ihrerseits zu vergleichen, einen als besonders zuverlässig anzusehenden Wert aus ihnen auszuwählen und somit sicherzustellen, daß nachfolgende Verarbeitungsstufen mit ein und demselben Eingangswert arbeiten (steuern). Zu diesem Zweck kann vorgesehen werden, daß jedes Ausgangssignal einer Mehrzahl von Konsolidierungseinheiten zugeführt wird und jede dieser Konsolidierungseinheiten ein konsolidiertes Ausgangssignal nach ein und demselben Konsolidierungsalgorithmus bildet.

Um nicht eine Entstehung von Fehlkonsolidierungen zu begünstigen, wird vorzugsweise vorgesehen, daß Ausgangssignale vom Konsolidierungsalgorithmus ausgeschlossen und vorzugsweise als fehlerbehaftet markiert werden, wenn ihr Betrag über eine vorgegebene Zeitspanne hinweg um mehr als einen höchstzulässigen Unterschiedswert von einem konsolidierten Ausgangssignal abweicht.

Ein sich nach diesen Kriterien verhaltendes System konfiguriert sich somit selbst auf die Zahl der berücksichtigungsfähigen, aktiven Kanäle und verhindert eine Verfälschung des Konsolidierungsergebnisses durch abnorme Ausgangssignale.

Vorteilhaft werden erst die konsolidierten Ausgangssignale je einem Stellglied (Aktor) zum Stellen einer Stellgröße zugeführt. Insbesondere dann ist dies vorteilhaft, wenn aus Redundanzgründen mehrere Stellglieder ein und dieselbe Stellgröße stellen; unterschiedliche Steuersignale würden dazu führen, daß die Stellglieder gegeneinander arbeiten und sich gegenseitig beeinträchtigen oder beschädigen könnten.

Zur Verkürzung der Dauer zwischen Meßgrößenerfassung und Stellsignalausgabe, insbesondere zur Einsparung von Totzeiten für ein Einlesen der Meßsignale, sowie ggf. zur Entlastung eines zu einem Redundanzkanal gehörenden Leitrechners kann es besonders wichtig sein, daß die Auswertung der redundanten Meßsignale, die Bestätigung der redundanten Auswertungssignale und/oder die Konsolidierung der redundanten Ausgangssignale mittels einer spezialisierten Hardwareschaltung, vorzugsweise mittels einer anwenderspezifischen integrierten Schaltung, durchgeführt werden kann.

Diese Möglichkeit zur Beschleunigung der redundanten Meßsignalauswertung und -abarbeitung sei besonders hervorgehoben. Die Möglichkeit einer Zeitersparnis spielt eine umso größere Rolle, je höher die Echtzeitanforderungen an das mit den Meßsignalen zu speisende System sind. Zum Beispiel müssen in Flugführungssystemen bis zu 640 Mal pro Sekunde hunderte von Parameterdaten erfaßt und ausgewertet werden, um Leistungsfähigkeit und Beherrschbarkeit moderner Luft fahrzeuge zu ermöglichen. Für viele weitergehende Einsatz- und Entwicklungspläne bildet die Durchlaufzeit von Bearbeitungsalgorithmen eine entscheidende Grenze.

Weitere Vorteile und Merkmale der Erfindung sind nachstehend anhand eines in der Zeichnung dargestellten Ausführungsbeispiels erläutert. Es zeigt

Fig. 1 eine schematische Darstellung der Auswertungs-, Bestätigungs- und Konsolidierungs-Ebenen eines Systems mit vier parallelen Kanälen, d.h. dreifacher Redundanz;

Fig. 2 ein Diagramm zur Veranschaulichung der Zeitausnutzung in einem Kanal ohne spezialisierte Gesamteinheit;

Fig. 3 ein Diagramm zur Veranschaulichung der Zeitausnutzung in einem Kanal mit spezialisierter Gesamteinheit;

Fig. 4 eine schematische Darstellung einer spezialisierten Gesamteinheit zur Durchführung der Auswertungs-, Bestätigungs- und Konsolidierungs-Algorithmen eines Kanals.

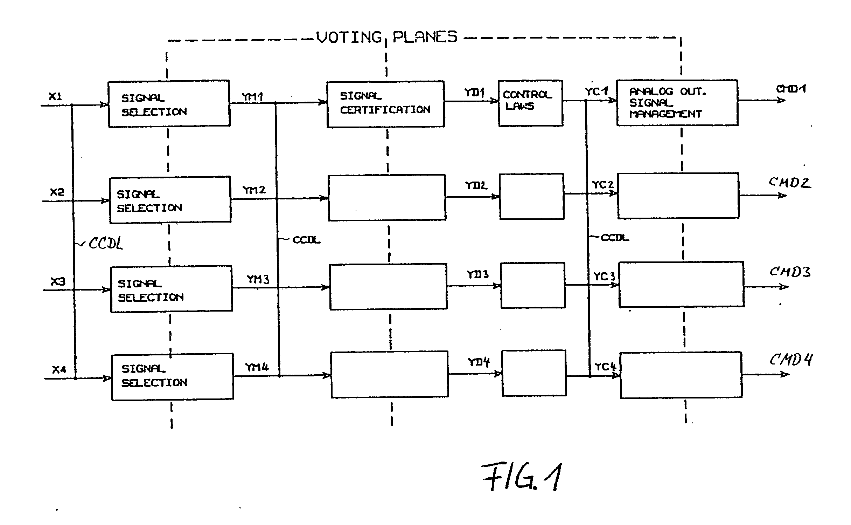

Fig. 1 dient einer schematischen Beschreibung eines erfindungsgemäßen Verfahrens und einer erfindungsgemäßen Schaltungsanordnung zum Bilden eines von einer Meßgröße abhängigen Signals nach einem Algorithmus aus einer Mehrzahl von Meßsignalen X1, X2, X3, X4, die mittels einer Mehrzahl von die Meßgröße erfassenden Sensoren innerhalb eines Zeitintervalls, insbesondere gleichzeitig, gewonnen werden.

Dargestellt ist ein System mit drei Entscheidungsstufen oder Abstimmungsebenen (Voting Planes), nämlich

- einer Auswertungsebene (Signal Selecton),
- einer Bestätigungsebene (Signal Certification) und
- einer Konsolidierungsebene (Signal Management), und mit vier parallelen Kanälen, d.h. dreifacher Redundanz.

Zwischen der Bestätigungsebene und der Konsolidierungsebene liegt eine Verarbeitungsebene, in der (redundant) bestätigte Meßwerte redundant verarbeitet werden, z.B. in Bewegungs- und/oder Steuergleichungen (Control Laws) für ein Luftfahrzeug eingesetzt werden, um redundante Stellsignale zu erzeugen.

Mehr als dreifache Redundanz ist in der bisherigen Praxis zwar (noch) nicht gefordert, kann bei Bedarf jedoch nach dem Muster der vorliegenden Offenbarung behandelt werden.

Eine Meßgröße (z.B. ein Flugparameter-Istwert oder ein Steuerbefehlssignal) wird im vorliegenden Beispiel mittels vier (nicht näher dargestellter) Sensoren erfaßt und liegt in Form von vier parallelen Meßsignalen X1, X2, X3, X4 am Eingang des Systems (z.B. eines Flugführungssystems) an.

Das System ist im vorliegenden Fall so aufgebaut, daß es im störungsfreien Fall durchgängig mit vier Kanälen arbeitet. Dies kann z.B. bedeuten, daß die Meßsignale X1, X2, X3, X4 von vier parallelen Flugführungsrechnern oder von vier spezialisierten Schaltungsanordnungen, die diesen Flugführungsrechnern untergeordnet sind, verwertet werden.

Im Störungsfall können die verschiedenen Abstimmungsebenen unterschiedliche Redundanz aufweisen. Theoretisch kann auch vorgesehen sein, daß auch bereits im störungsfreien Fall verschiedene Ebenen unterschiedliche Redundanz aufweisen.

Die Redundanz steigert die Verläßlichkeit der Verwertung so weit, daß ein damit ausgestattetes System fehlertolerant wird. Zum Beispiel werden in einem redundanten Flugführungssystem fehlerhafte Sensoren und Aktoren so behandelt bzw. toleriert, daß deren Fehlverhalten keine negativen Auswirkungen auf die Flugführung hat.

Die Verwertung der Redundanz erfordert allerdings hierfür geeignete Entscheidungs-Algorithmen. Im vorliegenden Fall wird hierzu in einer ersten Stufe (Abstimmungsebene) jedes Meßsignal X1, X2, X3, X4 vier Auswertungseinheiten (Signal Selection) zugeführt, und jede dieser Auswertungseinheiten bildet ein Auswertungssignal YM1, YM2, YM3, YM4 (die untereinander normalerweise gleich sind) nach einem anschließend näher erläuterten Auswertungsalgorithmus.

Durch eine solche Auswertung der Meßsignale X1, X2, X3, X4 wird vor allem der Vorteil erzielt, daß auch die Auswertung der Meßsignale in redundanter Weise in vier Kanälen erfolgt und daher zuverlässiger und fehlertoleranter ist.

Bei Verwendbarkeit von vier Meßsignalen X1, X2, X3, X4 besteht der Auswertungsalgorithmus vorteilhaft darin, das kleinste und das größte (verwendbare) Meßsignal zu ignorieren und aus den beiden dazwischen liegenden Meßsignalen einen Mittelwert, z.B. den linearen Mittelwert oder einen gewichteten Mittelwert, zu bilden.

Bei Verwendbarkeit von dreien der Meßsignale X1, X2, X3, X4 besteht der Auswertungsalgorithmus vorteilhaft darin, das kleinste und das größte (verwendbare) Meßsignal zu ignorieren und aus dem dazwischen liegenden Meßsignal das Auswertungssignal (YM1, YM2, YM3 bzw. YM4) zu bilden, insbesondere dieses direkt als das Auswertungssignal zu wählen.

Bei Verwendbarkeit von zwei Meßsignalen besteht der Auswertungsalgorithmus vorteilhaft darin, aus den beiden Meßsignalen einen Mittelwert, z.B. den linearen Mittelwert, zu bilden.

Bei Verwendbarkeit nur eines Meßsignals besteht der Auswertungsalgorithmus darin, aus diesem Meßsignal das Auswertungssignal zu bilden, insbesondere dieses direkt als das Auswertungssignal zu wählen. Der Einschluß dieser Grundvariante in die Definition der Konfigurationen ist insofern vorteilhaft, als dadurch das Schema des Verfahrensablaufs sowohl auf der Auswertungsstufe als auch auf nachfolgenden Stufen beibehalten werden kann.

Werden die Meßsignale X1, X2, X3, X4 vor ihrer Auswertung analog oder digital gefiltert, wird die Auswertung unempfindlicher gegen abrupte Änderungen eines Meßsignals, wie sie typischerweise vor allem in Fehlerfällen (z.B. bei Leitungsbruch, Masseschluß, Sensorausfall etc.) auftreten. Neben diesem Schutz vor verfälschenden Transienten dient eine Filterung auch der Abblockung von Rauschanteilen in den Meßsignalen X1, X2, X3, X4.

Eine (vorzugsweise digitale) Filterung kann z.B. wie folgt geschehen: Das ungefilterte Meßsignal des n-ten Kanals (n = 1, 2, 3, 4) eines gegebenen Zeitintervalles t heiße $X_n(t)$. Aus den ungefilterten Meßsignalen X1(t)) X2(t), X3(t), X4(t) werde nach dem oben definierten Auswertungsalgorithmus ein Auswertungssignal (Mid Value) XM(t) gebildet. Ferner sei mit $Z_n(t)$ (n = 1, 2, 3, 4) ein Filterwert bezeichnet. Das gefilterte Meßsignal des n-ten Kanals (n = 1, 2, 3, 4) eines gegebenen Zeitintervalles t heiße dann $Y_n(t)$ und werde rekursiv gebildet gemäß der Gleichung

$$Y_n(t) = X_n(t) - Z_n(t) ,$$

worin

$$Z_n(t+1) = Z_n(t) + K[Y_n(t) - XM(t)]$$

mit

$$Z_n(0) = 0$$

gelte und K eine Konstante (kleiner Eins) sei, die für jeden Satz von Sensoren anders sein kann.

Meßsignale X1, X2, X3, X4 (ungefiltert) bzw. Y1, Y2, Y3, Y4 (gefiltert) können vom Auswertungsalgorithmus ausgeschlossen und z.B. in einer Statusmatrix als fehlerbehaftet markiert werden, wenn ihr Betrag über eine vorgegebene Zeitspanne hinweg einen Höchstwert überschreitet oder einen Mindestwert unterschreitet und/oder um mehr als einen höchstzulässigen Unterschiedswert von einem Auswertungssignal YM1, YM2, YM3, YM4 abweicht. Umgekehrt kann ein Meßsignal wieder berücksichtigt werden, wenn es nicht mehr aus dem genannten Rahmen fällt.

Ein sich nach diesen Kriterien verhaltendes System konfiguriert sich somit selbst auf die Zahl der berücksichtigungsfähigen, aktiven Kanäle und verhindert eine Verfälschung des Meß- und Auswertungsergebnisses durch abnorme Meßsignale.

Bereits die jeweils am Ausgang der Auswertungseinheiten vorliegenden Auswertungssignale YM1, YM2, YM3, YM4 könnten einer weiteren Verarbeitung, z.B. redundanten Verarbeitungseinheiten zur Lösung einer Bewegungsgleichung (Control Laws), zugeführt werden.

Aus Zuverlässigkeits- und Sicherheitsgründen vorzuziehen ist es jedoch, die redundanten (mehrfach vorliegenden und normalerweise gleichen) Auswertungssignale YM1, YM2, YM3, YM4 ihrerseits zu vergleichen, einen als besonders zuverlässig anzusehenden Wert aus ihnen auszuwählen und sicherzustellen, daß nachfolgend angeordnete Verarbeitungseinheiten mit ein und demselben Eingangswert arbeiten (rechnen).

Zu diesem Zweck ist im vorliegenden Beispiel vorgesehen, daß jedes Auswertungssignal YM1, YM2, YM3, YM4 über einen Querkanal CCDL (Cross Channel Data Link) vier Bestätigungseinheiten (Signal Certification) zugeführt wird und jede dieser Bestätigungseinheiten ein bestätigtes Auswertungs signal YD1, YD2, YD3, YD4 nach ein und demselben Bestätigungsalgorithmus bildet. Dabei werden die Auswertungssignale YM1, YM2, YM3, YM4 vorzugsweise nichtgefiltert, da sie - im Gegensatz zu den Sensorsignalen X1, X2, X3, X4 -im Normalfall identisch sind und gegenseitige Abweichungen nicht maskiert, sondern als Fehlerindikator genutzt werden sollten.

Um nicht eine Entstehung von Fehlbestätigungen zu begünstigen, wird vorzugsweise vorgesehen, daß ein oder ggf. auch mehrere Auswertungssignale YM1, YM2, YM3, YM4 vom Bestätigungsalgorithmus ausgeschlossen werden und vorzugsweise der oder die betroffenen Kanäle in einer Statusmatrix als fehlerbehaftet markiert werden, wenn der Betrag des oder der Auswertungssignale YM1, YM2, YM3, YM4 über eine vorgegebene Zeitspanne hinweg um mehr als einen höchstzulässigen Unterschiedswert von einem bestätigten Auswertungssignal YD1, YD2, YD3, YD4 abweicht.

Ein sich nach diesen Kriterien verhaltendes System konfiguriert sich somit selbst auf die Zahl der berücksichtigungsfähigen, aktiven Kanäle und verhindert eine Verfälschung des Bestätigungsergebnisses YD1, YD2, YD3, YD4 durch abnorme Auswertungssignale YM1, YM2, YM3, YM4.

Bei Vorliegen zweier oder mehr gleicher Auswertungssignale YM1, YM2, YM3, YM4 besteht der Bestätigungsalgorithmus vorteilhaft darin, aus diesen, insbesondere aus den beiden ersten gleichen, Auswertungssignalen YM1, YM2, YM3, YM4 ein bestätigtes Auswertungssignal YD1, YD2, YD3 bzw. YD4 zu bilden, insbesondere eines der gleichen Auswertungssignale YM1, YM2, YM3, YM4 als das bestätigte Auswertungssignal YD1, YD2, YD3 bzw. YD4 zu wählen.

Bei Vorliegen zweier voneinander verschiedener Paare gleicher Auswertungssignale YM1, YM2, YM3, YM4 (sog. schizophrener Zustand) besteht der Bestätigungsalgorithmus vor teilhaft darin, in einer vorbestimmmten, definierten Weise aus dem einen oder aus dem anderen Paar ein bestätigtes Auswertungssignal YD1, YD2, YD3 bzw. YD4 zu bilden, z.B. eines der gleichen Auswertungssignale YM1, YM2, YM3, YM4 als das bestätigte Auswertungssignal YD1, YD2, YD3 bzw. YD4 zu wählen, oder einen Mittelwert zu bilden o.dgl. Indem man die algorithmische Behandlung eines solchen Zustands vorherbestimmt, wird ein Eintreten eines undefinierten Zustandes vermieden, welches eine u.U. fatale Blockierung oder Chaotisierung der Bestätigungsstufe zur Folge haben könnte.

Bei Fehlen zweier gleicher Auswertungssignale YM1, YM2, YM3, YM4 besteht der Bestätigungsalgorithmus vorteilhaft darin, das in dem jeweiligen Kanal zuletzt bestätigte Auswertungssignal YD1, YD2, YD3 bzw. YD4 vorsichtshalber beizubehalten.

Vorteilhaft werden erst die bestätigten Auswertungssignale YD1, YD2, YD3, YD4 je einer Verarbeitungseinheit (Control Laws) zum Erzeugen je eines Ausgangssignals YC1, YC2, YC3, YC4, insbesondere eines Stellsignals, zugeführt.

Bereits diese Ausgangssignale YC1, YC2, YC3, YC4 könnten beispielsweise je einem Stellglied (Aktor) zum Stellen einer Stellgröße zugeführt werden. Im vorliegenden Beispiel wird es jedoch vorgezogen, die redundanten (mehrfach vorhandenen und normalerweise gleichen) Ausgangssignale YC1, YC2, YC3, YC4 ihrerseits zu vergleichen, einen als besonders zuverlässig anzusehenden Wert aus ihnen auszuwählen und somit sicherzustellen, daß nachfolgende weitere Verarbeitungsstufen (etwa Stellglieder) mit ein und demselben Eingangswert arbeiten (steuern).

Zu diesem Zweck wird im dargestellten Fall vorgesehen, daß jedes Ausgangssignal YC1, YC2, YC3, YC4 über einen Querkanal CCDL (Cross Channel Data Link) vier Konsolidierungs einheiten (Signal Management) zugeführt wird und jede dieser Konsolidierungseinheiten ein konsolidiertes Ausgangssignal CMD1, CMD2, CMD3 bzw. CMD4 nach ein und demselben Konsolidierungsalgorithmus bildet. Dabei werden die Ausgangssignale YC1, YC2, Y3, YC4 vorzugsweise nicht gefiltert, da sie - im Gegensatz zu den Sensorsignalen X1, X2, X3, X4 - im Normalfall identisch sind und gegenseitige Abweichungen nicht maskiert, sondern als Fehlerindikator genutzt werden sollten.

Um nicht eine Entstehung von Fehlkonsolidierungen zu begünstigen, wird vorzugsweise vorgesehen, daß Ausgangssignale YC1, YC2, YC3, YC4 vom Konsolidierungsalgorithmus ausgeschlossen werden und betroffene Kanäle vorzugsweise als fehlerbehaftet markiert werden, wenn der Betrag von Ausgangssignalen YC1, YC2, YC3, YC4 über eine vorgegebene Zeitspanne hinweg um mehr als einen höchstzulässigen Unterschiedswert von einem konsolidierten Ausgangssignal CMD1, CMD2, CMD3, CMD4 abweicht.

Ein sich nach diesen Kriterien verhaltendes System konfiguriert sich somit selbst auf die Zahl der berücksichtigungsfähigen, aktiven Kanäle und verhindert eine Verfälschung des Konsolidierungsergebnisses CMD1, CMD2, CMD3, CMD4 durch abnorme Ausgangssignale YC1, YC2, YC3, YC4.

Bei Vorliegen zweier oder mehr gleicher Ausgangssignale YC1, YC2, YC3, YC4 besteht der Konsolidierungsalgorithmus vorteilhaft darin, aus diesen, insbesondere aus den beiden ersten gleichen, Ausgangssignalen YC1, YC2, YC3, YC4 ein konsolidiertes Ausgangssignal CMD1, CMD2, CMD3, CMD4 zu bilden, insbesondere eines der gleichen Ausgangssignale YC1, YC2, YC3, YC4 als das konsolidierte Ausgangssignal CMD1, CMD2, CMD3, CMD4 zu wählen.

Bei Vorliegen zweier voneinander verschiedener Paare gleicher Ausgangssignale YC1, YC2, YC3, YC4 (sog. schizophrener Zustand) besteht der Konsolidierungsalgorithmus vorteilhaft darin, in einer vorbestimmten, definierten Weise aus dem einen oder aus dem anderen Paar ein konsolidiertes Ausgangssignal CMD1, CMD2, CMD3, CMD4 zu bilden, insbesondere eines der gleichen Ausgangssignale YC1, YC2, YC3, YC4 als das konsolidierte Ausgangssignal CMD1, CMD2, CMD3, CMD4 zu wählen, oder einen Mittelwert zu bilden o.dgl. Indem man die algorithmische Behandlung eines solchen Zustands vorherbestimmt, wird ein Eintreten eines undefinierten Zustandes vermieden, welches eine u.U. fatale Blockierung oder Chaotisierung der Konsolidierung zur Folge haben könnte.

Bei Fehlen zweier gleicher Ausgangssignale YC1, YC2, YC3, YC4 besteht der Konsolidierungsalgorithmus vorteilhaft darin, das in dem jeweiligen Kanal zuletzt konsolidierte Ausgangssignal CMD1, CMD2, CMD3 bzw. CMD4 vorsichtshalber beizubehalten.

Vorteilhaft werden erst die konsolidierten Ausgangssignale CMD1, CMD2, CMD3, CMD4 z.B. je einem (nicht näher dargestellten) Stellglied (Aktor) zum Stellen einer Stellgröße zugeführt. Insbesondere dann ist dies vorteilhaft, wenn aus Redundanzgründen mehrere Stellglieder ein und dieselbe Stellgröße stellen; unterschiedliche Steuersignale sind dann tunlichst zu vermeiden, da solche dazu führen würden, daß die Stellglieder gegeneinander arbeiten und sich gegenseitig beeinträchtigen oder beschädigen könnten.

Die Funktionen der Auswertungsebene, Bestätigungsebene und Konsolidierungsebene, die jeweils in einem gemeinsamen Redundanzkanal liegen, können in einer Gesamteinheit (Vote Accelerator) nacheinander durchgeführt werden. Diese Gesamteinheit kann z.B. ein dem betreffenden Redundanzkanal zugehöriger Leitrechner (beispielsweise ein Flugführungsrechner FCC [Flight Control Computer]) sein.

Andererseits kann es zur Verkürzung der Dauer zwischen Meßgrößenerfassung (Meßsignale X1, X2, X3, X4) und Stellsignalausgabe (konsolidierte Ausgangssignale CMD1, CMD2, CMD3, CMD4) sowie ggf. zur Entlastung eines zu einem Redundanzkanal gehörenden Leitrechners besonders wichtig sein, daß die Auswertung der redundanten Meßsignale X1, X2, X3, X4, die Bestätigung der redundanten Auswertungssignale YM1, YM2, YM3, YM4 und/oder die Konsolidierung der redundanten Ausgangssignale YC1, YC2, YC3, YC4 mittels einer spezialisierten Hardwareschaltung, vorzugsweise mittels einer anwenderspezifischen integrierten Schaltung, durchgeführt werden kann, um z.B. eine schnelle digitale Regelschleifenschließung zu ermöglichen.

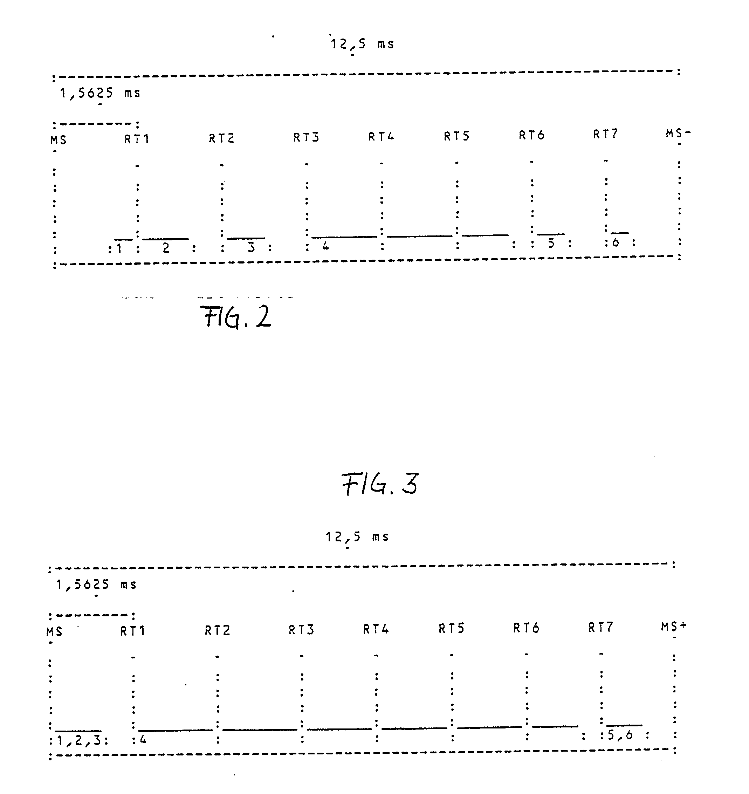

In diesem Zusammenhang veranschaulicht Fig.2 die Zeitausnutzung in einem Kanal ohne spezialisierte Gesamteinheit, das heißt in einem Kanal, in dem ein zugehöriger Leitrechner selbst die Auswertungs-, Bestätigungs- und Konsolidierungs-Funktionen erledigt. Die Betrachtung erstreckt sich über einen Zeitrahmen von 12,5 Millisekunden (ms), der hier durch Makro-Synchronisationssignale MS begrenzt und durch Echtzeitmarken RTi (Real Time; i = 1, 2, ..., 7) in Abschnitte von 1,5625 ms unterteilt ist.

In der Fußzeile des Diagramms sind mit aufsteigenden arabischen Zahlen aufeinanderfolgende Arbeitsphasen bezeichnet, deren zeitliche Länge mittels durchgezogener waagrechter Linien veranschaulicht ist. Die so kenntlich gemachten Phasen sind im einzelnen:

1 - Einlesen der Meßsignale X1, X2, X3, X4;

2 - Erzeugung der Auswertungssignale YM1, YM2, YM3, YM4;

3 - Erzeugung der bestätigten Auswertungssignale YD1, ...;

4 - Erzeugung der Ausgangssignale YC1, YC2, YC3, YC4;

5 - Erzeugung der konsolidierten Ausgangssignale CMD1, ...;

6 - Ausgabe der konsolidierten Ausgangssignale CMD1, ... .

Wie ersichtlich, liegt eine rechnerinterne Totzeit von 4,6875 ms zwischen dem Einlesen der Meßsignale X1, X2, X3, X4 und dem Beginn der Verarbeitung der bestätigten Auswertungssignale YD1, YD2, YD3, YD4, d.h. dem Beginn des eigentlichen Rechnens mit der Meßgröße, z.B. im Rahmen von Regelungs- und Steuergesetzen für ein Luftfahrzeug. Je komplexer diese Berechnungen sind, desto mehr Zeit benötigen sie und desto wahrscheinlicher ist es, daß besagte Totzeit eine Einschnürung für weitere Verfeinerungen der betreffenden Regelung bedeutet. Im Beispiel gemäß Fig.2 stehen für die Regelgesetzberechnungen gerade 4,6875 ms zur Verfügung.

Demgegenüber veranschaulicht Fig.3 die Zeitausnutzung in einem Kanal mit spezialisierter Gesamteinheit, das heißt in einem Kanal, in dem einem zum Kanal gehörigen Leitrechner eine Schaltungsanordnung zur Erledigung der Auswertungs-, Bestätigungs- und Konsolidierungs-Funktionen beigeordnet ist, wie unten ausführlicher dargelegt ist. Die Betrachtung erstreckt sich wieder über einen Zeitrahmen von 12,5 Millisekunden (ms), der durch Makro-Synchronisationssignale MS begrenzt und durch Echtzeitmarken RTi (Real Time; i = 1, 2, ..., 7) in Abschnitte von 1,5625 ms unterteilt ist.

In der Fußzeile des Diagramms sind wiederum mit aufsteigenden arabischen Zahlen aufeinanderfolgende Arbeitsphasen bezeichnet, deren zeitliche Länge mittels durchgezogener waagrechter Linien veranschaulicht ist. Auch hier handelt es sich um folgende Phasen:

1 - Einlesen der Meßsignale X1, X2, X3, X4;

2 - Erzeugung der Auswertungssignale YM1, YM2, YM3, YM4;

3 - Erzeugung der bestätigten Auswertungssignale YD1, ...;

4 - Erzeugung der Ausgangssignale YC1, YC2, YC3, YC4;

5 - Erzeugung der konsolidierten Ausgangssignale CMD1, ...;

6 - Ausgabe der konsolidierten Ausgangssignale CMD1, ... .

Wie ersichtlich, beträgt die Totzeit zwischen dem Einlesen der Meßsignale X1, X2, X3, X4 und dem Beginn der Verarbeitung der bestätigten Auswertungssignale YD1, YD2, YD3, YD4, d.h. dem Beginn des eigentlichen Rechnens mit der Meßgröße, nur noch 1,5625 ms. Durch ein autonomes Arbeiten der spezialisierten Schaltungsanordnung benötigt ferner die Phase 5 (Erzeugung der konsolidierten Ausgangssignale CMD1, CMD2, CMD3, CMD4) 1,5625 ms weniger Zeit.

Als Rechenzeit für die Durchführung der Regelgesetzberechnung stehen hier somit 9,375 ms zur Verfügung, d.h. doppelt soviel wie im Fall gemäß Fig. 2.

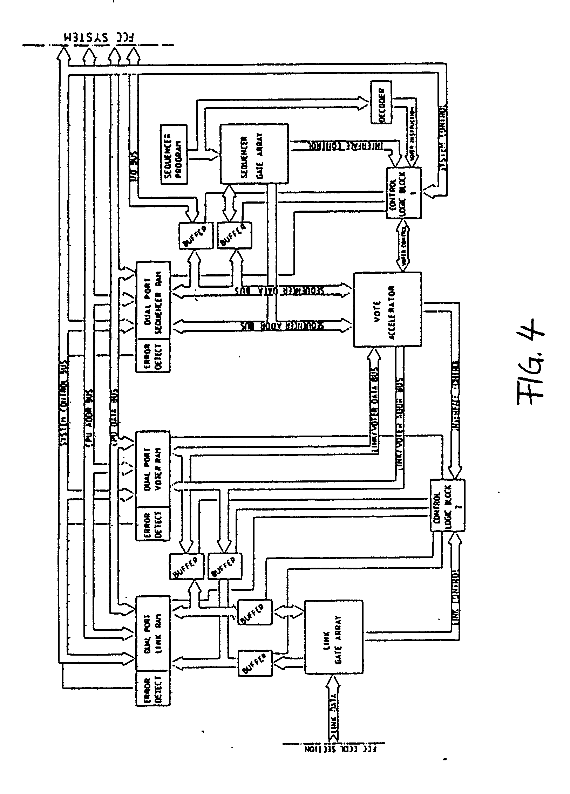

Unter Bezugnahme auf Fig.4 wird im folgenden auf das Konzept der spezialisierten Schaltungsanordnung näher eingegangen. Fig.4 ist eine schematische Darstellung einer spezialisierten Gesamteinheit (Vote Accelerator) zur Durchführung der Auswertungs-, Bestätigungs- und Konsolidierungs-Algorithmen eines (Redundanz-)Kanals. Fig.4 zeigt ferner eine exemplarische Anbindung der spezialisierten Schaltungsanordnung (Vote Accelerator) an Eingabe/Ausgabe-Schnittstellen, Speichereinheiten und vor allem an eine sogenannte Sequencer-Steuereinheit.

Die Schnittstellen betreffen zum einen eine strichpunktiert angedeutete Querkanal-Busverbindung CCDL (Cross Channel Data Link) und zum anderen Busverbindungen zu einem im vorliegenden Beispiel unterstellten Flugführungsrechner FCC (Flight Control Computer) des gegebenen Redundanzkanals.

Die dargestellten Speichereinheiten 'Link Ram', 'Vcter Ram' und 'Sequencer Ram' sind Schreib-Lese-Speicher mit jeweils zwei Eingängen und Ausgängen für Speicherzugriffe (Dual-Port-Ram's), so daß sowohl die spezialisierte Schaltungsanordnung 'Vote Accelerator' als auch der Flugführungsrechner FCC auf die Speicher 'Voter Ram' und 'Sequencer Ram' zugreifen können.

Die Sequencer-Steuereinheit enthält ein Sequencer-Programm, das autonom vom Flugführungsrechner FCC die spezialisierte Schaltungsanordnung 'Vote Accelerator' steuert, das heißt, es sind keine Aktivitäten des Prozessors des Flugführungsrechners FCC erforderlich, um Meßsignale X1, X2, X3, X4 einzulesen, zwischen den Redundanzkanälen auszutauschen, algorithmisch auszuwerten, zu bestätigen, zu konsolidieren etc.

Die Sequencer-Steuereinheit veranlaßt periodisch, im vorliegenden Beispiel mit Beginn eines jeden Makro-Zeitrahmens von 12,5 ms, das Einlesen der Meßsignale X1, X2, X3, X4 in den Speicher 'Sequencer Ram'. Hieraus wird im Anschluß sofort eine Verteilung dieser Meßsignale an alle anderen Kanäle mittels einer ersten Datenübertragung über den Quer kanal CCDL in die entsprechenden Speicher 'Link Ram' vorgenommen.

Gleichzeitig erhält die spezialisierte Schaltungsanordnung 'Vote Accelerator' von der Sequencer-Steuereinheit eine Steuerinformation zum Einlesen der Meßsignale aus dem Speicher 'Link Ram' und zum Abarbeiten des Auswertungsalgorithmus. Dessen Ergebnis (z.B. YM1) wird zur Verteilung an alle Kanäle in den Speicher 'Sequencer Ram' geschrieben.

Nun erfolgt, angestoßen von der Sequencer-Steuereinheit, die Verteilung der in den einzelnen Kanälen errechneten Auswertungssignale YM1, YM2, YM3, YM4 mittels einer zweiten Datenübertragung über den Querkanal CCDL an alle Kanäle. Daraus resultiert ein erneuter Eintrag in den Speicher 'Link Ram' eines jeden Kanals, von wo aus die jeweilige spezialisierte Schaltungsanordnung 'Vote Accelerator' die Daten für die Abarbeitung des Bestätigungsalgorithmus holt. Dieser wird dann sogleich begonnen.

Die (normalerweise identischen) Bestätigungs-Ergebnisse YD1, YD2, YD3, YD4 der einzelnen Kanäle stehen danach in dem zum jeweiligen Kanal gehörigen Speicher 'Voter Ram' zur Verfügung für die anschließende redundante Regelgesetzberechnung.

Nachdem dann Ausgangssignale YC1, YC2, YC3, YC4 berechnet sind, werden aus diesen, nach einer dritten Datenübertragung über den Querkanal CCDL, die konsolidierten Ausgangssignale CMD1, CMD2, CMD3, CMD4 ermittelt.

Somit ist die Voraussetzung geschaffen, völlig unabhängig und parallel die Auswertung, Bestätigung und Konsolidierung der Sensordaten vorzunehmen, während die Sequencer-Steuereinheit Sensor-Daten oder errechnete Daten beispielsweise in den Speicher 'Link Ram' einliest oder aus ihm ausliest oder über den Querkanal CCDL übertragen läßt etc.

Um die spezialisierte Schaltungsanordnung 'Vote Accelerator' an eine bestehende Hardware des Flugführungsrechners FCC adaptieren zu können, weist sie zwei unabhängige Bussysteme auf: Ein Bussystem ist mit dem Adressen-Bus bzw. Datenbus des Speichers 'Link Ram' verbunden, das zweite Bussystem ist mit dem Adressen-Bus bzw. Datenbus des Speichers 'Sequencer Ram' verbunden.

Die spezialisierte Schaltungsanordnung 'Vote Accelerator' ist im vorliegenden Beispiel ein Prozessor/Controller auf der Basis von mikroprogrammierbaren Bit-Scheiben (Bit-Slice) Prozessor-Elementen oder arithmetisch-logischen Einheiten (ALU). Dieses Konzept verbindet die Vorteile eines Prozessors mit festem Befehlssatz, nämlich
- vorgetestete Hardware,
- leicht änderbarer Microcode,
- strukturierte Programme,
mit den Vorteilen einer diskret aufgebauten Logik, nämlich
- hohe Geschwindigkeit,
- parallele Abarbeitung,
- spezialisierter reduzierter Befehlssatz.

**Ansprüche**

1. Verfahren zum Bilden eines eine Meßgröße repräsentierenden Auswertungssignals (YM) nach einem Auswertungsalgorithmus aus einer Mehrzahl von Meßsignalen (X1, X2, X3, X4), die mittels einer Mehrzahl von die Meßgröße erfassenden Sensoren innerhalb eines Zeitintervalls, insbesondere gleichzeitig, gewonnen werden, **dadurch gekennzeichnet,** daß Jedes Meßsignal (X1, X2, X3, X4) einer Mehrzahl von Auswertungseinheiten zugeführt wird und Jede dieser Auswertungseinheiten ein Auswertungssignal (YM1, YM2, YM3, YM4) nach dem Auswertungsalgorithmus bildet.

2. Verfahren nach Anspruch 1, **dadurch gekennzeichnet**, daß aus den Meßsignalen (X1, X2, X3, X4) vor ihrer Auswertung in den Auswertungseinheiten gefilterte Meßsignale (Y1, Y2, Y3, Y4) gebildet werden.

3. Verfahren nach Anspruch 1 oder 2, **dadurch gekennzeichnet**, daß Meßsignale (X1, X2, X3, X4) vom Auswertungsalgorithmus ausgeschlossen und vorzugsweise als fehlerbehaftet markiert werden, wenn ihr Betrag über eine vorgegebene Zeitspanne hinweg einen Höchstwert überschreitet oder einen Mindestwert unterschreitet und/oder um mehr als einen höchstzulässigen Unterschiedswert von einem Auswertungssignal (YM1, YM2, YM3, YM4) abweicht.

4. Verfahren nach Anspruch 1, 2 oder 3, **dadurch gekennzeichnet**, daß bei Verwendbarkeit von vier Meßsignalen (X1, X2, X3, X4) der Auswertungsalgorithmus darin besteht, das kleinste und das größte Meßsignal (X1, X2, X3, X4) zu ignorieren und aus den beiden dazwischen liegenden Meßsignalen einen Mittelwert zu bilden.

5. Verfahren nach Anspruch 1, 2 oder 3, **dadurch gekennzeichnet**, daß bei Verwendbarkeit von drei Meßsignalen (X1, X2, X3, X4) der Auswertungsalgorithmus darin besteht, das kleinste und das größte Meßsignal (X1, X2, X3, X4) zu ignorieren und aus dem dazwischen liegenden Meßsignal das Auswertungssignal (YM1, YM2, YM3, YM4) zu bilden.

6. Verfahren nach Anspruch 1, 2 oder 3, **dadurch gekennzeichnet**, daß bei Verwendbarkeit von zwei Meßsignalen (X1, X2, X3, X4) der Auswertungsalgorithmus darin besteht, aus den beiden Meßsignalen (X1, X2, X3, X4) einen Mittelwert zu bilden.

7. Verfahren nach Anspruch 1, 2 oder 3, **dadurch gekennzeichnet**, daß bei Verwendbarkeit nur eines Meßsignals (X1, X2, X3, X4) der Auswertungsalgorithmus darin besteht, aus diesem Meßsignal das Auswertungssignal (YM1, YM2, YM3, YM4) zu bilden.

8. Verfahren nach einem der Ansprüche 1 bis 7, **dadurch gekennzeichnet,** daß jedes Auswertungssignal (YM1, YM2, YM3, YM4) einer Mehrzahl von Bestätigungseinheiten zugeführt wird und jede dieser Bestätigungseinheiten ein bestätigtes Auswertungssignal (YD1, YD2, YD3, YD4) nach ein und demselben Bestätigungsalgorithmus bildet.

9. Verfahren nach Anspruch 8, **dadurch gekennzeichnet**, daß Auswertungssignale (YM1, YM2, YM3, YM4) vom Bestätigungsalgorithmus ausgeschlossen und vorzugsweise als fehlerbehaftet markiert werden, wenn ihr Betrag über eine vorgegebene Zeitspanne hinweg um mehr als einen höchstzulässigen Unterschiedswert von einem bestätigten Auswertungssignal (YD1, YD2, YD3, YD4) abweicht.

10. Verfahren nach Anspruch 8 oder 9, **dadurch gekennzeichnet**, daß bei Vorliegen zweier oder mehr gleicher Auswertungssignale (YM1, YM2, YM3, YM4) der Bestätigungsalgorithmus darin besteht, Bus diesen, insbesondere aus den beiden ersten gleichen, Auswertungssignalen (YM1, YM2, YM3, YM4) ein bestätigtes Auswertungssignal (YM1, YM2, YM3, YM4) zu bilden.

11. Verfahren nach Anspruch 8 oder 9, **dadurch gekennzeichnet**, daß bei Vorliegen zweier voneinander verschiedener Paare gleicher Auswertungssignale (YM1, YM2, YM3, YM4) der Bestätigungsalgorithmus darin besteht, in definierter Weise aus dem einen oder aus dem anderen Paar oder aus einem Zwischenwert der beiden Paare ein bestätigtes Auswertungssignal (YM1, YM2, YM3, YM4) zu bilden.

12. Verfahren nach Anspruch 8 oder 9, **dadurch gekennzeichnet**, daß bei Fehlen zweier gleicher Auswertungssignale (YM1, YM2, YM3, YM4) der Bestätigungsalgorithmus darin besteht, das zuletzt bestätigte Auswertungssignal (YM1, YM2, YM3, YM4) beizubehalten.

13. Verfahren nach einem der Ansprüche 1 bis 7, **dadurch gekennzeichnet**, daß jedes Auswertungssignal (YM1, YM2, YM3, YM4) je einer Verarbeitungseinheit zum Erzeugen je eines Ausgangssignals (YC1, YC2, YC3, YC4), insbesondere eines Stellsignals, zugeführt wird.

14. Verfahren nach einem der Ansprüche 8 bis 12, **dadurch gekennzeichnet**, daß jedes bestätigte Auswertungssignal (YD1, YD2, YD3, YD4) je einer Verarbeitungseinheit zum Erzeugen je eines Ausgangssignals (YC1, YC2, YC3, YC4), insbesondere eines Stellsignals, zugeführt wird.

15. Verfahren nach Anspruch 13 oder 14, **dadurch gekennzeichnet**, daß jedes Ausgangssignal (YC1, YC2, YC3, YC4) einer Mehrzahl von Konsolidierungseinheiten zugeführt wird und jede dieser Konsolidierungseinheiten ein konsolidiertes Ausgangssignal (CMD1, CMD2, CMD3, CMD4), insbesondere ein konsolidiertes Stellsignal, nach ein und demselben Konsolidierungsalgorithmus bildet.

16. Verfahren nach Anspruch 15, **dadurch gekennzeichnet**, daß Ausgangssignale (YC1, YC2, YC3, YC4) vom Konsolidierungsalgorithmus ausgeschlossen und vorzugsweise als fehlerbehaftet markiert werden, wenn ihr Betrag über eine vorgegebene Zeitspanne hinweg um mehr als einen höchstzulässigen Unterschiedswert von einem konsolidierten Ausgangssignal (CMD1, CMD2, CMD3, CMD4) abweicht.

17. Verfahren nach Anspruch 15 oder 16, **dadurch gekennzeichnet**, daß bei Vorliegen zweier oder mehr gleicher Ausgangssignale (YC1, YC2, YC3, YC4) der Konsolidierungsalgorithmus darin besteht, aus diesen, insbesondere aus den beiden ersten gleichen, Ausgangssignalen (YC1, YC2, YC3, YC4) ein konsolidiertes Ausgangssignal (CMD1, CMD2, CMD3, CMD4) zu bilden.

18. Verfahren nach Anspruch 15 oder 16, **dadurch gekennzeichnet**, daß bei Vorliegen zweier voneinander verschiedener Paare gleicher Ausgangssignale (YC1, YC2, YC3, YC4) der Konsolidierungsalgorithmus darin besteht, in definierter Weise aus dem einen oder aus dem anderen Paar oder aus einem Zwischenwert der beiden Paare ein konsolidiertes Ausgangssignal (CMD1, CMD2, CMD3, CMD4) zu bilden.

19. Verfahren nach Anspruch 15 oder 16, **dadurch gekennzeichnet**, daß bei Fehlen zweier gleicher Ausgangssignale (YC1, YC2, YC3, YC4) der Konsolidie rungsalgorithmus darin besteht, das zuletzt konsolidierte Ausgangssignal (CMD1, CMD2, CMD3, CMD4) beizubehalten.

20. Verfahren nach einem der Ansprüche 1 bis 19, **dadurch gekennzeichnet**, daß es mittels einer spezialisierten Hardwareschaltung durchgeführt wird.

21. Verfahren nach Anspruch 20, **dadurch gekennzeichnet**, daß es mittels einer anwenderspezifischen integrierten Schaltung durchgeführt wird.

22. Verfahren nach einem der Ansprüche 1 bis 21, **dadurch gekennzeichnet**, daß die Funktionen je einer Auswertungseinheit, Bestätigungseinheit und Konsolidierungseinheit in einer Gesamteinheit durchgeführt werden.

23. Verfahren nach einem der Ansprüche 13 bis 22, **dadurch gekennzeichnet**, daß die Mehrzahl von Ausgangssignalen (YC1, YC2, YC3, YC4) bzw. die Mehrzahl von konsolidierten Ausgangssignalen (CMD1, CMD2, CMD3, CMD4) eine Mehrzahl von Stellgliedern zum Stellen ein und derselben Stellgröße, insbesondere einer Stellgröße eines Luftfahrzeugs, steuert.

24. Verfahren nach einem der Ansprüche 1 bis 23, **dadurch gekennzeichnet**, daß eine Mehrzahl von Sensoren ein und denselben Flug- oder Steuer-Parameter eines Luftfahrzeugs erfaßt.

25. Schaltungsanordnung zur Bildung eines eine Meßgröße repräsentierenden Auswertungssignals (YM) nach einem Auswertungsalgorithmus aus einer Mehrzahl von Meßsignalen (X1, X2, X3, X4), die mittels einer Mehrzahl von die Meßgröße erfassenden Sensoren innerhalb eines Zeitintervalls, insbesondere gleichzeitig, erzeugbar sind, **gekennzeichnet durch** eine Mehrzahl von Auswertungseinheiten, denen jedes Meßsignal (X1, X2, X3, X4) zuführbar ist und die zur Bildung je eines Auswertungssignals (YM1, YM2, YM3, YM4) nach dem Auswertungsalgorithmus eingerichtet sind.

26. Schaltungsanordnung nach Anspruch 25, **dadurch gekennzeichnet**, daß die Auswertungseinheiten zur Bildung gefilterter Meßsignale (Y1, Y2, Y3, Y4) aus den Meßsignalen (X1, X2, X3, X4) eingerichtet sind.

27. Schaltungsanordnung nach Anspruch 25 oder 26, **dadurchgekennzeichnet**, daß die Auswertungseinheiten eingerichtet sind, Meßsignale (X1, X2, X3, X4) vom Auswertungsalgorithmus auszuschließen und vorzugsweise als fehlerbehaftet zu markieren, wenn ihr Betrag über eine vorgegebene Zeitspanne hinweg einen Höchstwert überschreitet oder einen Mindestwert unterschreitet und/oder um mehr als einen höchstzulässigen Unterschiedswert von einem Auswertungssignal (YM1, YM2, YM3, YM4) abweicht.

28. Schaltungsanordnung nach Anspruch 25, 26 oder 27, **dadurch gekennzeichnet**, daß die Auswertungseinheiten eingerichtet sind, bei Verwendbarkeit von vier Meßsignalen (X1, X2, X3, X4) das kleinste und das größte Meßsignal (X1, X2, X3, X4) zu ignorieren und aus den beiden dazwischen liegenden Meßsignalen einen Mittelwert zu bilden.

29. Schaltungsanordnung nach Anspruch 25, 26 oder 27, **dadurch gekennzeichnet**, daß die Auswertungseinheiten eingerichtet sind, bei Verwendbarkeit von drei Meßsignalen (X1, X2, X3, X4) das kleinste und das größte Meßsignal (X1, X2, X3, X4) zu ignorieren und aus dem dazwischen liegenden Meßsignal das Auswertungssignal (YM1, YM2, YM3, YM4) zu bilden.

30. Schaltungsanordnung nach Anspruch 25, 26 oder 27, **dadurch gekennzeichnet**, daß die Auswertungseinheiten eingerichtet sind, bei Verwendbarkeit von zwei Meßsignalen (X1, X2, X3, X4) aus den beiden Meßsignalen (X1, X2, X3, X4) einen Mittelwert zu bilden.

31. Schaltungsanordnung nach Anspruch 25, 26 oder 27, **dadurch gekennzeichnet**, daß die Auswertungseinheiten eingerichtet sind, bei Verwendbarkeit nur eines Meßsignals (X1, X2, X3, X4) aus diesem Meßsignal das Auswertungssignal (YM1, YM2, YM3, YM4) zu bilden.

32. Schaltungsanordnung nach einem der Ansprüche 25 bis 31, **gekennzeichnet durch** eine Mehrzahl von Bestätigungseinheiten, denen jedes Auswertungssignal (YM1, YM2, YM3, YM4) zuführbar ist und die zur Bildung je eines bestätigten Auswertungssignals (YD1, YD2, YD3, YD4) nach ein und demselben Bestätigungsalgorithmus eingerichtet sind.

33. Schaltungsanordnung nach Anspruch 32, **dadurch gekennzeichnet**, daß die Bestätigungseinheiten eingerichtet sind, Auswertungssignale (YM1, YM2, YM3, YM4) vom Bestätigungsalgorithmus auszuschließen und vorzugsweise als fehlerbehaftet zu markieren, wenn ihr Betrag über eine vorgegebene Zeitspanne hinweg um mehr als einen höchstzulässigen Unterschiedswert von einem bestätigten Auswertungssignal (YD1, YD2, YD3, YD4) abweicht.

34. Schaltungsanordnung nach Anspruch 32 oder 33, **dadurch gekennzeichnet**, daß die Bestätigungseinheiten eingerichtet sind, bei Vorliegen zweier oder mehr gleicher Auswertungssignale (YM1, YM2, YM3, YM4) aus diesen, insbesondere aus den beiden ersten gleichen, Auswertungssignalen (YM1, YM2, YM3, YM4) ein bestätigtes Auswertungssignal (YM1, YM2, YM3, YM4) zu bilden.

35. Schaltungsanordnung nach Anspruch 32 oder 33, **dadurch gekennzeichnet**, daß die Bestätigungseinheiten eingerichtet sind, bei Vorliegen zweier voneinander verschiedener Paare gleicher Auswertungssignale (YM1, YM2, YM3, YM4) in definierter Weise aus dem einen oder aus dem anderen Paar oder aus einem Zwischenwert der beiden Paare ein bestätigtes Auswertungssignal (YM1, YM2, YM3, YM4) zu bilden.

36. Schaltungsanordnung nach Anspruch 32 oder 33, **dadurch gekennzeichnet**, daß die Bestätigungseinheiten eingerichtet sind, bei Fehlen zweier gleicher Auswertungssignale (YM1, YM2, YM3, YM4) das zuletzt bestätigte Auswertungssignal (YM1, YM2, YM3, YM4) beizubehalten.

37. Schaltungsanordnung nach einem der Ansprüche 25 bis 31, **gekennzeichnet durch** je eine Verarbeitungseinheit zum Erzeugen je eines Ausgangssignals (YC1, YC2, YC3, YC4), insbesondere eines Stellsignals, aus je einem Auswertungssignal (YM1, YM2, YM3, YM4).

38. Schaltungsanordnung nach einem der Ansprüche 32 bis 36, **gekennzeichnet durch** je eine Verarbeitungseinheit zum Erzeugen je eines Ausgangssignals (YC1, YC2, YC3, YC4), insbesondere eines Stellsignals, aus je einem bestätigten Auswertungssignal (YD1, YD2, YD3, YD4).

39. Schaltungsanordnung nach Anspruch 37 oder 38, **gekennzeichnet durch** eine Mehrzahl von Konsolidierungseinheiten, denen jedes Ausgangssignal (YC1, YC2, YC3, YC4) zuführbar ist und die zur Bildung eines konsolidierten Ausgangssignals (CMD1, CMD2, CMD3, CMD4), insbesondere eines konsolidierten Stellsignals, nach ein und demselben Konsolidierungsalgorithmus eingerichtet sind.

40. Schaltungsanordnung nach Anspruch 39, **dadurch gekennzeichnet**, daß die Konsolidierungseinheiten eingerichtet sind, Ausgangssignale (YC1, YC2, YC3, YC4) vom Konsolidierungsalgorithmus auszuschließen und vorzugsweise als fehlerbehaftet zu markieren, wenn ihr Betrag über eine vorgegebene Zeitspanne hinweg um mehr als einen höchstzulässigen Unterschiedswert von einem konsolidierten Ausgangssignal (CMD1, CMD2, CMD3, CMD4) abweicht.

41. Schaltungsanordnung nach Anspruch 39 oder 40, **dadurch gekennzeichnet**, daß die Konsolidierungseinheiten eingerichtet sind, bei Vorliegen zweier oder mehr gleicher Ausgangssignale (YC1, YC2, YC3, YC4) aus diesen, insbesondere aus den beiden ersten gleichen, Ausgangssignalen (YC$_1$, YC$_2$, YC$_3$, YC$_4$) ein konsolidiertes Ausgangssignal (CMD1, CMD2, CMD3, CMD4) zu bilden.

42. Schaltungsanordnung nach Anspruch 39 oder 40, **dadurch gekennzeichnet**, daß die Konsolidierungseinheiten eingerichtet sind, bei Vorliegen zweier voneinander verschiedener Paare gleicher Ausgangssignale (YC1, YC2, YC3, YC4) in definierter Weise aus dem einen oder aus dem anderen Paar oder aus einem Zwischenwert der beiden Paare ein konsolidiertes Ausgangssignal (CMD1, CMD2, CMD3, CMD4) zu bilden.

43. Schaltungsanordnung nach Anspruch 39 oder 40, **dadurch gekennzeichnet**, daß die Konsolidierungseinheiten eingerichtet sind, bei Fehlen zweier gleicher Ausgangssignale (YC1, YC2, YC3, YC4) das zuletzt konsolidierte Ausgangssignal (CMD1, CMD2, CMD3, CMD4) beizubehalten.

44. Schaltungsanordnung nach einem der Ansprüche 25 bis 43, **dadurch gekennzeichnet**, daß je eine Auswertungseinheit, Bestätigungseinheit und Konsolidierungseinheit zu einer Gesamteinheit vereinigt sind.

45. Schaltungsanordnung nach einem der Ansprüche 37 bis 44, **dadurch gekennzeichnet**, daß die Mehrzahl von Ausgangssignalen (YC1, YC2, YC3, YC4) bzw. die Mehrzahl von konsolidierten Ausgangssignalen (CMD1, CMD2, CMD3, CMD4) einer Mehrzahl von Stellgliedern zum Stellen ein und derselben Stellgröße eines Luftfahrzeugs zuführbar ist.

46. Schaltungsanordnung nach einem der Ansprüche 25 bis 45, **gekennzeichnet durch** eine Mehrzahl von Eingängen für eine Mehrzahl von Sensoren zur Erfassung ein und desselben Flug- oder Steuer-Parameters eines Luftfahrzeugs.

47. Schaltungsanordnung ('Vote Accelerator') nach einem der Ansprüche 25 bis 46, **dadurch gekennzeichnet**, daß sie eine spezialisierte Schaltungsanordnung ist.

48. Schaltungsanordnung ('Vote Accelerator') nach Anspruch 47, **dadurch gekennzeichnet**, daß sie eine anwenderspezifische integrierte Schaltung ist.

49. Schaltungsanordnung ('Vote Accelerator') nach Anspruch 47 oder 48, **dadurch gekennzeichnet**, daß sie einem Leitrechner (FCC) beigeordnet ist zur Erledigung der Auswertungs-, Bestätigungs- und/oder Konsolidierungs-Funktion.

50. Schaltungsanordnung ('Vote Accelerator') nach Anspruch 49, **dadurch gekennzeichnet**, daß sie eingerichtet ist, die Auswertungs-, Bestätigungs- und/oder Konsolidierungs-Funktion ohne Aktivität des Leitrechners (FCC) zu erledigen.

51. Schaltungsanordnung ('Vote Accelerator) nach einem der Ansprüche 47 bis 50, **gekennzeichnet durch** eine Querkanal-Busverbindung (CCDL) zur Herstellung einer Datenverbindung zu anderen Schaltungsanordnungen der gleichen Art.

52. Schaltungsanordnung ('Vote Accelerator') nach einem der Ansprüche 47 bis 51, **gekennzeichnet durch** Schreib-Lese-Speicher ('Link Ram', 'Voter Ram', 'Sequencer Ram') mit jeweils zwei Eingängen und Ausgängen für Speicherzugriffe.

53. Schaltungsanordnung ('Vote Accelerator') nach einem der Ansprüche 47 bis 52, **gekennzeichnet durch** eine Sequencer-Steuereinheit zur vom Flugführungsrechner (FCC) autonomen Steuerung der Schaltungsanordnung.

54. Schaltungsanordnung ('Vote Accelerator') nach Anspruch 53, **dadurch gekennzeichnet**, daß die Sequencersteuereinheit eingerichtet ist) ein periodisches Einlesen der Meßsignale (X1, X2, X3, X4) in einen ihr zugeordneten Speicher ('Sequencer Ram') zu veranlassen.

55. Schaltungsanordnung ('Vote Accelerator') nach Anspruch 54, **dadurch gekennzeichnet**, daß die Sequencer-Steuereinheit eingerichtet ist, eine Verteilung der Meßsignale (X1, X2, X3, X4) an andere Schaltungsanordnungen der gleichen Art über den Querkanal (CCDL) in diesen zugeordnete Speicher ('Link Ram') zu veranlassen.

56. Schaltungsanordnung ('Vote Accelerator') nach Anspruch 55, **dadurch gekennzeichnet**, daß Sequencer-Steuereinheit eingerichtet ist, ein Einlesen der Meßsignale (X1, X2, X3, X4) aus dem dem Querkanal (CCDL) zugeordneten Speicher ('Link Ram').

57. Schaltungsanordnung ('Vote Accelerator') nach Anspruch 56, **dadurch gekennzeichnet**, daß Sequencer-Steuereinheit eingerichtet ist, ein Abarbeiten des Auswertungsalgorithmus zu veranlassen und dessen Ergebnis (z.B. YM1) in den ihr zugeordneten Speicher ('Sequencer Ram') schreiben zu lassen.

58. Schaltungsanordnung ('Vote Accelerator') nach Anspruch 57, **dadurch gekennzeichnet**, daß Sequencer-Steuereinheit eingerichtet ist, eine Verteilung der in den einzelnen Auswertungseinheiten errechneten Auswertungssignale (YM1, YM2, YM3, YM4) mittels einer Datenübertragung über den Querkanal (CCDL) an andere Schaltungsanordnungen der gleichen Art zu veranlassen.

59. Schaltungsanordnung ('Vote Accelerator') nach einem der Ansprüche 53 bis 58, **dadurch gekennzeichnet**, daß sie eingerichtet ist, die Auswertung, Bestätigung und Konsolidierung vorzunehmen, während die Sequencer-Steuereinheit Daten einliest, ausliest oder über den Querkanal (CCDL) übertragen läßt

60. Schaltungsanordnung ('Vote Accelerator') nach einem der Ansprüche 53 bis 59, **gekennzeichnet durch** ein erstes, mit einem Adressen-pus bzw. Datenbus des Speichers ('Link Ram') verbundenes Bussystem und ein zweites, mit einem Adressen-Bus bzw. Datenbus des Speichers ('Sequencer Ram') verbundes Bussystem.

61. Schaltungsanordnung ('Vote Accelerator') nach einem der Ansprüche 47 bis 60, **dadurch gekennzeichnet,** daß sie ein Prozessor/Controller auf der Basis von mikroprogrammierbaren Bit-Scheiben (Bit-Slice) Prozessor-Elementen oder arithmetisch-logischen Einheiten (ALU) ist.

FIG.1

12,5 ms

1,5625 ms

MS    RT1    RT2    RT3    RT4    RT5    RT6    RT7    MS⁻

:1: 2 : 3 : 4 : 5 : :6 :

FIG. 2

FIG. 3

12,5 ms

1,5625 ms

MS    RT1    RT2    RT3    RT4    RT5    RT6    RT7    MS⁺

:1,2,3: :4 : :5,6 :

EP 0 415 281 A2

**FIG. 4**

SYSTEM CONTROL BUS

CPU ADDR BUS

CPU DATA BUS

I/O BUS

FCC SYSTEM

ERROR DETECT — DUAL PORT LINK RAM

ERROR DETECT — DUAL PORT VOTER RAM

ERROR DETECT — DUAL PORT SEQUENCER RAM

SEQUENCER PROGRAM

BUFFER

SEQUENCER GATE ARRAY

SEQUENCE ADDR BUS

SEQUENCE DATA BUS

LINK GATE ARRAY

FCC CCDL SECTION

LINK DATA

VOTE ACCELERATOR

LINK/VOTER DATA BUS

LINK/VOTER ADDR BUS

VOTER CONTROL

CONTROL LOGIC BLOCK 1

INTERFACE CONTROL

DECODER

VOTER INSTRUCTION

SYSTEM CONTROL

CONTROL LOGIC BLOCK 2

LINK CONTROL

INTERFACE CONTROL